# EUROPEAN PATENT SPECIFICATION

(11) **EP 2 377 340 B1**
(45) Date of publication and mention of the grant of the patent: **27.06.2018**
(21) Application number: 09788520.6
(22) Date of filing: 08.04.2009
(51) Int. Cl.: H04B 7/155, H04W 76/14

(54) **LOCAL COMMUNICATION BETWEEN MOBILE STATIONS VIA ONE OR MORE RELAY STATIONS**
LOKALE KOMMUNIKATION ZWISCHEN MOBILSTATIONEN ÜBER EINE ODER MEHRERE RELAISSTATIONEN
COMMUNICATION LOCALE ENTRE DES STATIONS MOBILES PAR L'INTERMÉDIAIRE D'UNE OU PLUSIEURS STATIONS RELAIS

(30) Priority: 19.12.2008 US 139135 P; 07.04.2009 US 419882
(43) Date of publication of application: 19.10.2011
(73) Proprietor: Telefonaktiebolaget LM Ericsson (publ), 164 83 Stockholm (SE)
(72) Inventor: YU, Kai, S-116 39 Stockholm (SE); CHEN, Tsao-Tsen, S-125 34 Älvsjö (SE)
(74) Representative: Brann AB
(86) International application number: PCT/SE2009/050368
(87) International publication number: WO 2010/071544

(56) References cited:
- EP-A- 1 517 487
- EP-A1- 1 517 487
- WO-A-2004/107693
- WO-A2-2008/002702
- US-A1- 2004 023 652
- HONGYI WU ET AL: "Integrated Cellular and Ad Hoc Relaying Systems: iCAR" IEEE JOURNAL ON SELECTED AREAS IN COMMUNICATIONS, IEEE SERVICE CENTER, PISCATAWAY, US, vol. 19, no. 10, 1 October 2001 (2001-10-01), XP011055480 ISSN: 0733-8716
- YING-DAR LIN ET AL: "Multihop cellular: a new architecture for wireless communications" INFOCOM 2000. NINETEENTH ANNUAL JOINT CONFERENCE OF THE IEEE COMPUTER AND COMMUNICATIONS SOCIETIES. PROCEEDINGS. IEEE TEL AVIV, ISRAEL 26-30 MARCH 2000, PISCATAWAY, NJ, USA,IEEE, US, vol. 3, 26 March 2000 (2000-03-26), pages 1273-1282, XP010376063 ISBN: 978-0-7803-5880-5

## Description

### TECHNICAL FIELD

The technical field relates to radio telecommunications, and particularly, to communications between mobile stations using one or more relay stations.

### BACKGROUND

A mobile radio communication system, such as a UMTS (Universal Mobile Telecommunication System) type system, includes a mobile radio communication network communicating with mobile terminals or UEs (User Equipments) and with external networks. Traditionally, communications are facilitated using one or more radio base stations that provide radio coverage for one or more cell areas. To facilitate wireless coverage, the use of relay stations (RSs) has been considered in the hope of providing better coverage, higher throughput, and thereby, improving overall system performance. In a relay system, simple repeaters are deployed by amplifying and forwarding the transmitted signal to the destination. But system performance can be further improved if more advanced decode-and-forward relay stations are employed. A relay station can be either full duplex or half duplex.

Recent efforts have focussed on cooperative relaying in multi-hop networks, where multiple RSs are available in the system. Commonly-assigned U.S. patent publication 2007/0160014 is an example. By having multiple RSs cooperate together, advantages such as macro-diversity gain and multiplexing gain can be achieved, and thereby, further improve coverage, link quality, and system throughput. U.S. patent publication 2007/0160014 also discloses multiple antennas deployed at the transmitter/RSs/receiver. Cooperative relaying can be combined with advanced adaptive antenna and multiple-input multiple-output (MIMO) technologies to for further advantage.

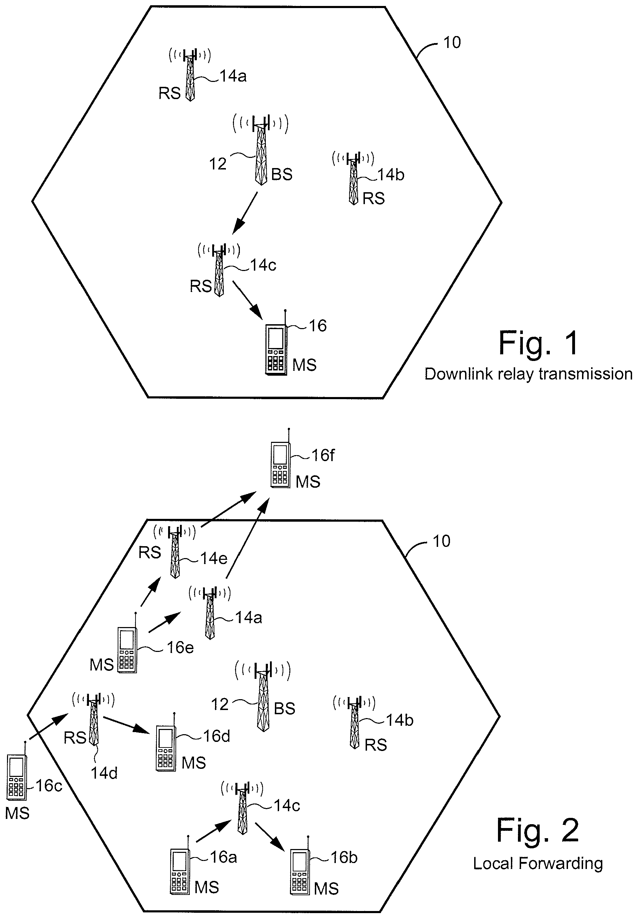

Most of the work in current cellular systems focuses on either downlink (DL) or uplink (UL) relay transmission, e.g., IEEE 802.16j WiMAX technology. Figure 1 shows a downlink relay transmission in a cell 1 0 of a cellular system, where the radio base station (BS) 12 transmits a downlink radio signal to a relay station (RS) 14c, and the relay station 14c forwards the signal to a mobile radio station (MS) 16. In the uplink direction, the mobile station 16 sends a radio signal to the relay station 14c which then sends that signal to the base station 12.

### SUMMARY

In this application, a wireless communication between two mobiles stations, typically but not necessarily within the same cell, using one or more relay stations without involving a base station in the relay. This type of communication is referred to here as "local forwarding." Local forwarding is particularly useful when the two mobile stations are located close to one or several relay stations and relatively far away from the base station. In that scenario, it is often preferable for the two mobiles to communicate directly via one or several relay station(s) without the communication passing through the base station. While local forwarding may be beneficially used in any environment, non-limiting example local forwarding situations include university campuses, large company sites, etc.

A method is disclosed for communicating between a first mobile station and a second mobile station in a radio communications system that includes a base station associated with a cell coverage area and one or more relay stations located in the cell. An association is determined between each of the first and second mobile stations and one or more of the relay stations. Based on the determined associations, one or more common relay stations is determined, and, in response to determining the one or more common relay stations, the one or more common relay stations is instructed to perform a radio communication between the first and second mobile stations without the radio communication passing through the base station.

In a non-limiting example embodiment, each mobile station may be associated with a group of one or more relay stations, and each association is determined based on a radio channel quality estimate parameter associated with a radio channel between the relay station and each one of the first and second mobile stations. For example, the association may include determining whether the radio channel quality estimate parameter exceeds a threshold value.

A common relay station has an association with both the first and second mobile stations and can perform local forwarding of radio communications between the first and second mobile stations without the radio communications passing through the base station. A determination may be made that multiple common relay stations have associations with both the first and second mobile stations. In that case, local forwarding of radio communications may be performed between the first and second mobile stations using multiple relay stations without the radio communications passing through the base station.

In an example non-limiting embodiment, each of the first and second mobile stations performs the associating step, identifies one or more associated relay stations, and provides associated relay station information to the base station directly or via relay station(s), and from that information, the base station determines if there is a common relay station for the first and second mobile stations. If so, radio resources are allocated for the common relay station to perform a radio communication between the first and second mobile stations. In another example non-limiting embodiment, each of the one or more relay stations performs the associating step, determines if it is associated with both the first and second mobile stations, and if so, reports that association to the base station. The base station determines a common relay station for the first and second mobile stations and allocates radio resources for the common relay station to perform a radio communication between the first and second mobile stations.

When there is no common relay station associated with the first and second mobile station, the radio communication between the first and second mobile stations may be performed as usual using the base station. In that case, one or more relay stations may be used in conjunction with the base station to perform the radio communication between the first and second mobile stations.

Apparatus are provided for a relay station for communicating between a first mobile station and a second mobile station in a radio communications system that includes a base station associated with a cell coverage area and arranged to communicate with the relay station located in the cell. Radio circuitry transmits and receives signals over a radio interface. A controller determines an association between each of the first and second mobile stations and the relay station and performs a radio communication using the radio circuitry between the first and second mobile stations without the radio communication passing through the base station.

The controller may determine the association based on a channel quality parameter provided by the first and second mobile stations based on a signal transmitted by the relay station. In one non-limiting example embodiment, the relay station includes a channel quality parameter estimator for estimating a channel quality parameter estimate for signals received from mobile stations. The controller then determines the association based on the estimated channel quality estimate parameters. The controller communicates the relay station's association with mobile stations to the base station and receives from the base station information selecting the relay station to perform the radio communication between the first and second mobile stations without the radio communication passing through the base station.

In one non-limiting example implementation, the controller generates a relay frame signal for local forwarding. The controller may be arranged to implement time-division transmit and receive (TTR) relay local forwarding or simultaneous transmit and receive (STR) relay local forwarding.

Apparatus are provided for a base station in a radio communications system where the base station is associated with a cell coverage area and is arranged to communicate with one or more relay stations located in the cell. Radio circuitry transmits and receives signals over a radio interface. A controller determines an association between each of a first mobile station and a second mobile station and the one or more relay stations, determines common relay station(s) based on the determined associations, and, in response to determining the common relay stations(s), instructs the common relay station(s) to perform a radio communication between the first and second mobile stations without the radio communication passing through the base station. The controller allocates radio resources for the common relay station to perform the radio communications.

The controller may receive a report from the first and second mobile stations including the first mobile station's association with one or more relay stations and the second mobile station's association with one or more relay stations. Alternatively, the controller may receive a report from the one or more relay stations including an association between mobile stations and one or more relay stations.

### BRIEF DESCRIPTION OF THE DRAWINGS

Figure 1 is a diagram illustrating an example relay communication;
Figure 2 is a diagram illustrating example local forwarding communications;
Figure 3 is a flow chart showing non-limiting example procedures for a base station based MS-RS association example embodiment for local forwarding;
Figure 4 is a flow chart showing non-limiting example procedures for a relay station based MS-RS association example embodiment for local forwarding;
Figure 5 is a non-limiting, example function block diagram of a base station-based MS-RS association example embodiment;
Figure 6 is a non-limiting, example function block diagram of a relay station-based MS-RS association example embodiment;
Figure 7 is a non-limiting, example function block diagram of a mobile station for use in local forwarding; and
Figures 8A and 8B illustrate non-limiting, example transmissions frames in a WiMax context.

### DETAILED DESCRIPTION

In the following description, for purposes of explanation and not limitation, specific details are set forth such as particular architectures, interfaces, techniques, etc. However, it will be apparent to those skilled in the art that the claimed technology may be practiced in other embodiments that depart from these specific details. That is, those skilled in the art will be able to devise various arrangements which, although not explicitly described or shown herein, embody the principles of the claimed technology and are included within its scope. In some instances, detailed descriptions of well-known devices, circuits, and methods are omitted so as not to obscure the description of the present invention with unnecessary detail. All statements herein reciting principles, aspects, and embodiments, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that block diagrams herein represent conceptual views of illustrative circuitry embodying the principles of the technology. Similarly, it will be appreciated various processes described may be substantially represented in a computer-readable medium and can be executed by a computer or processor.

The functions of the various elements including functional blocks labelled or described as "processor" or "controller" or "computer" may be provided through the use of dedicated hardware as well as hardware capable of executing software. When provided by a processor, the functions may be provided by a single dedicated processor, by a single shared processor, or by a plurality of individual processors, some of which may be shared or distributed. Moreover, a "processor" or "controller" may include, without limitation, digital signal processor (DSP) hardware, ASIC hardware, read only memory (ROM), random access memory (RAM), and/or other storage media.

Figure 2 is a diagram illustrating example local forwarding communications in a cell 10 of a cellular system. Although the radio base station (BS) 12 is provided and is in communication with the relay stations 14a-14e, (typically by radio or other type of communications link), it does not actively participate in local forwarding of radio communications between the mobile stations 16 orchestrated by one or more of the relay stations 14a-14e. In a first example local forwarding communication, a mobile station 16a sends a radio signal intended for mobile station 16b to relay station (RS) 14c which forwards that radio signal to the intended mobile station 16b. Both mobiles 16a and 16b are in the cell 10, are relatively close to relay station 14c, and are relatively far from the base station 12. However, local forwarding is not limited to such physical proximity relationships. Similarly, mobile station 16b may transmit a signal to mobile 16a via the relay station 14c without involving the base station 12.

Although mobile station 16c is located outside of the cell 10 and mobile station 16d is located within the cell 10, both mobiles are relatively close to relay station 14d and are relatively far from the base station 12. So in this second example local forwarding communication, the mobile station 16c sends a radio signal intended for mobile station 16d to relay station (RS) 14d which forwards or relays that radio signal to the intended mobile station 16d. Similarly, mobile station 16d may transmit a signal to mobile 16c via the relay station 14d without involving the base station 12.

A third example local forwarding situation is illustrated. Mobile station 16e communicates with mobile station 16f via relay stations 14a and 14e without involving the base station 12. Both mobiles are relatively close to relay stations 14a and 14f and are relatively far from the base station 12. Similarly, mobile station 16f may transmit a signal to mobile 16e via the relay stations 14e and 14f without involving the base station 12.

The base station 12 regularly sends out one or more broadcast signals in its coverage area identified by a unique broadcast identity for the cell in which it is broadcast. Each relay station 14 likewise regularly sends out a broadcast signal that is identified by a unique broadcast identity associated with that relay station. Non-limiting examples of broadcast signals include orthogonal or time-multiplexed pilot signals. Mobile stations 16 scan for these kinds of broadcast signals, and if within range, detect the identity associated with the broadcast entity and estimate the quality of the broadcast signal from the mobile radio's perspective. Any one or more of a variety of channel quality indicator (CQI) parameters may be estimated by the mobile stations including as non-limiting examples: signal to noise or interference ratio like CINR (carrier-to-interference-and-noise ratio), signal strength like RSSI (received signal strength indicator), path gain, path loss, power, link capacity, channel rank (for MIMO channels), etc. The CQI is compared to a pre-set threshold value to determine whether an association should be established. The mobile stations may provide CQI parameter estimate values to the base station, to nearby relay stations, or both on an established basis such as a regular reporting interval, event-triggered, polling, etc. where the comparison may be performed. Alternatively, the mobile stations may make the comparison and provide the associations to the relay and/or base station(s). Other and/or more sophisticated association determination techniques may be used based on the CQI parameter estimate values. Still further, CQI parameter estimates can also or alternatively be obtained at the relay stations via uplink transmissions from the mobile stations, e.g., in time division duplex (TDD) systems.

This information on the association between the mobile stations and relay stations is then fed back to the corresponding BS or relay station(s) by each mobile station, or kept at each relay station, e.g., for TDD systems. Note that each relay station can be associated with several mobile stations. A group of relay stations associated with different mobile stations may also overlap with each other. The mobile stations and/or relay stations continue to update this information based on the updated channel estimation.

Using CQI estimates, a determination is made when there is a relatively high CQI estimate for a communication from one or more relay stations with a particular mobile station, e.g., using a threshold comparison as noted above. In that situation, an association is established between the mobile station (MS) and the one or more relay stations (RSs) using the identifier(s) associated with the one or more relay stations. In one non-limiting example embodiment, those MS-RS associations are reported to the base station for storage in memory. In another non-limiting example embodiment, the one or more relay stations store the MS-RS associations in memory. If there is a common relay station or common relay stations for a source mobile station (e.g., the calling mobile) and a destination mobile station (e.g., the called mobile), then radio resources may be allocated to accomplish local forwarding with the common relay station(s) to facilitate communication between the source and destination mobile stations. Time-division transmit and receive (TTR) relay, simultaneous transmit and receive (STR) relay, or other relay technique may be employed as part of the local forwarding.

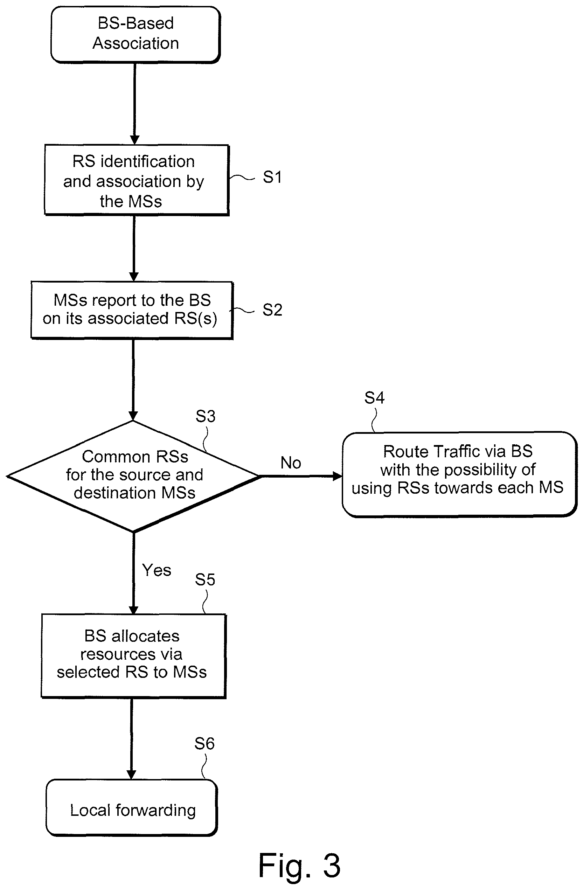

Figure 3 is a non-limiting, example function block diagram of a base station-based MS-RS association example embodiment for local forwarding, which is also referred to as a centralized scheduling example embodiment. The centralized scheduling relies on the base station to allocate resources to the mobile stations and relay station(s) that are active in the local forwarding. The base station is aware of the association between mobile stations and relay stations from reports received from the mobile stations directly or via the relay station(s). The base station compares two groups of one or more relay stations associated with the source mobile station and destination mobile station, respectively. The relay station(s) that are associated with both mobile stations are selected as active relay station(s) to forward the message from the source mobile station to the destination mobile station. The decision as well as resource allocation information will be sent to the corresponding mobile stations and relay station(s) by the base station. If there is no relay station associated with both mobile stations, uplink/downlink transmission involving the base station is used.

The relay stations that can provide good radio link quality to mobile stations, e.g., based on broadcast signals from the relays stations like pilot signals, are identified and associated with each mobile station, e.g., via a CQI detection and thresholding process (step S1). Each mobile station reports its associated relay station(s) to the base station (step S2). The base station checks whether the common relay station(s) is(are) available to both the source mobile station and the destination mobile station (step 3). If no common relay station is available, and thus local forwarding is not practical, downlink/uplink transmission involving the base station is used to route the traffic via base station with the possibility of using one or more relay stations towards each mobile station (step 4). Otherwise, the common relay station(s) is(are) selected for local forwarding. The base station informs the selected relay station(s) and mobile stations and allocates radio and perhaps other types of resources for local forwarding (step S5). Local forwarding between the two mobile stations is started using the selected relay station(s) and allocated radio resources without passing through the base station (step S6).

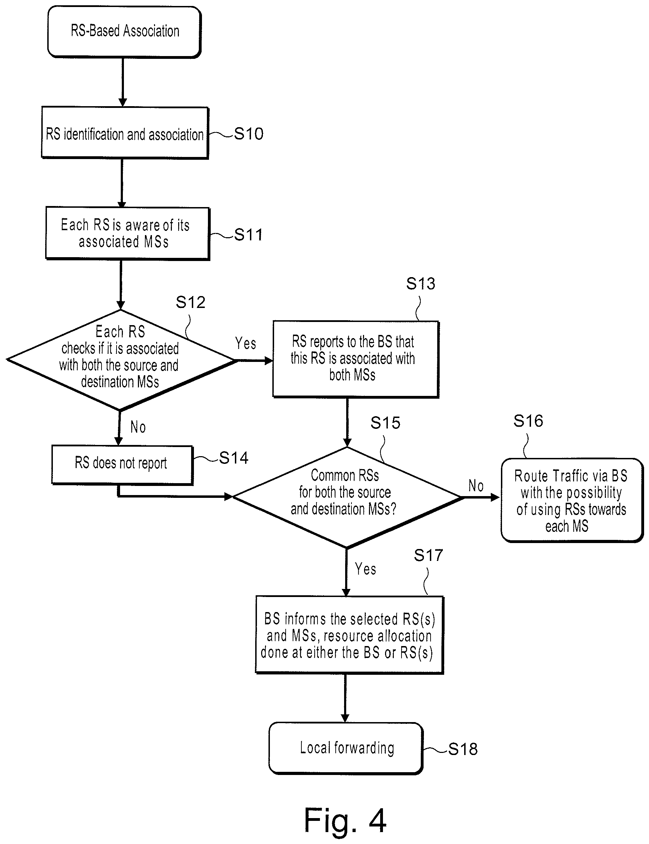

Figure 4 is a flow chart showing non-limiting example procedures for a relay station based MS-RS association example embodiment for local forwarding, which can be referred to as a either centralized scheduling or a distributed scheduling example embodiment depending on where the power allocation is done. In the distributed scheduling, each relay station is aware of its associated mobile stations, and at least part of the resource allocation is done at the relay station (s), e.g., bandwidth allocation. Non-transparent relays that transmit their own frame header (e.g., including a preamble, MAP messages, etc.) are preferable.

In this case, each relay station performs identification and association tasks (steps S10 and S11). In step S10, the relay stations are identified and associated with each mobile station depending on an estimated channel quality indicator. In time division duplex (TDD) systems, the relay stations can be identified at the relay side through uplink transmission as well. Each mobile station informs the corresponding relay stations about its association in S11. Step S11 is not necessary in TDD systems where the relay stations can identify and associate themselves with the corresponding mobile stations. The relay station checks whether it is associated with both a source mobile station and destination mobile station (step S12). The relay station reports to the base station if the relay station is associated with both mobile stations (step S13). Based on the report from the relay station(s), the base station determines if there is(are) common relay station(s) for the source and destination mobile stations (step 15), and if so, the base station selects the relay station(s) and informs the mobile stations and the selected relay station(s) (step S17). The radio resource allocation can be done either at the base station (centralized scheduling) or at each selected relay station(s) (distributed scheduling). Local forwarding between the two mobile stations is then started using the selected relay station(s) and allocated radio resources without passing through the base station (step S18). If the base station receives no report from the relay station (step S14) and there are no common relay station(s) for the source and destination mobile stations (step 15), normal uplink/downlink transmission via the base station is used (step S16).

When multiple relay stations are associated with both mobile stations, cooperative relaying may be implemented with additional control information from the base station for both approaches. In addition, multiple antennas and adaptive antenna systems (AASs) can be deployed at the mobile stations and/or relay stations. The relay stations may perform other tasks such as recording the start/ending time for the local forwarding transmissions and report such information to the base station.

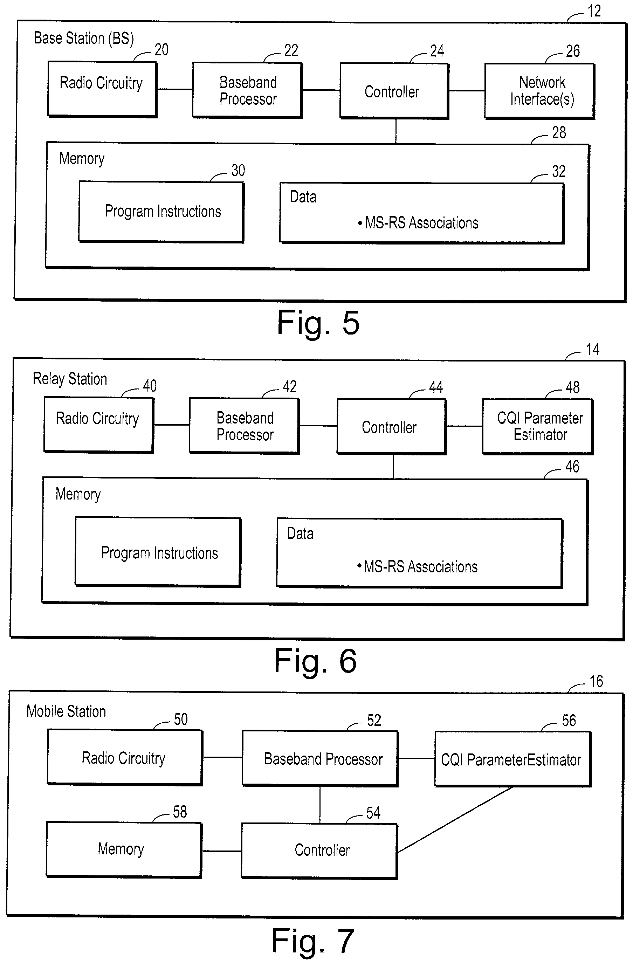

Figure 5 is a non-limiting, example function block diagram of a base station 12 that may be used in one or more local forwarding example embodiments. The base station 12 includes radio circuitry 20 for transmitting and receiving signals over the radio interface with mobile stations 16 and with relay stations 14. The radio circuitry 20 is coupled to a baseband processor 22 which performs baseband processing on the signals prior to transmission and after reception. A controller 24 controls at least some of the operations of the base station and is coupled to one or more network interface(s) 26 for communicating with other networks or other network nodes, e.g., other base stations, a base station controller, a core network, switched telephone networks, packet-switched networks, the internet, etc. The controller 24 is also coupled to a memory 28 which stores program instructions 30 for instructing the controller 24 to perform various tasks including base station tasks associated with implementing the flowcharts in Figures 3 and/or 4. The memory 28 also stores mobile station-relay station association information 32 if necessary.

Figure 6 is a non-limiting, example function block diagram of a relay station 14 that may be used in one or more local forwarding example embodiments. The relay station 14 includes radio circuitry 40 for transmitting and receiving signals over the radio interface with mobile stations 16 and with the base station 12. The radio circuitry 40 is coupled to a baseband processor 42 which performs baseband processing on the signals prior to transmission and after reception. A controller 44 controls at least some of the operations of the relay station and is coupled to a memory 46 which stores program instructions for instructing the controller to perform various tasks including relay station tasks associated with implementing the flowcharts in Figures 3 and/or 4. The memory 46 also stores mobile station-relay station association information if necessary. In an example embodiment where the relay station 14 determines the CQI parameter estimates for mobile stations based on uplink radio transmissions from those mobile stations, a CQI parameter estimator 48 is provided and coupled to the controller 44. The optional use of the CQI parameter estimator 48 for relay station association depends on the example embodiment used.

Figure 7 is a non-limiting, example function block diagram of a mobile station 16 for use in one or more local forwarding example embodiments. The mobile station 16 includes radio circuitry 50 for transmitting and receiving signals over the radio interface with relay stations 14 and with the base station 12. The radio circuitry 50 is coupled to a baseband processor 52 which performs baseband processing on the signals prior to transmission and after reception. A controller 54 controls at least some of the operations of the mobile station 16 and is coupled to a memory 58 which stores program instructions for instructing the controller to perform various tasks including mobile station tasks associated with implementing the flowcharts in Figures 3 and/or 4. The memory 58 may optionally also store mobile station-relay station association information. A CQI parameter estimator 56 is provided and coupled to the controller 54 in an example embodiment where the mobile station 16 determines the CQI parameter estimates based on downlink radio transmissions from relay stations. The optional use of the CQI parameter estimator 56 for relay station association depends on the example embodiment used. The controller 54 may send those CQI parameter estimates to the base station and/or relay station(s), or it may send MS-RS association information.

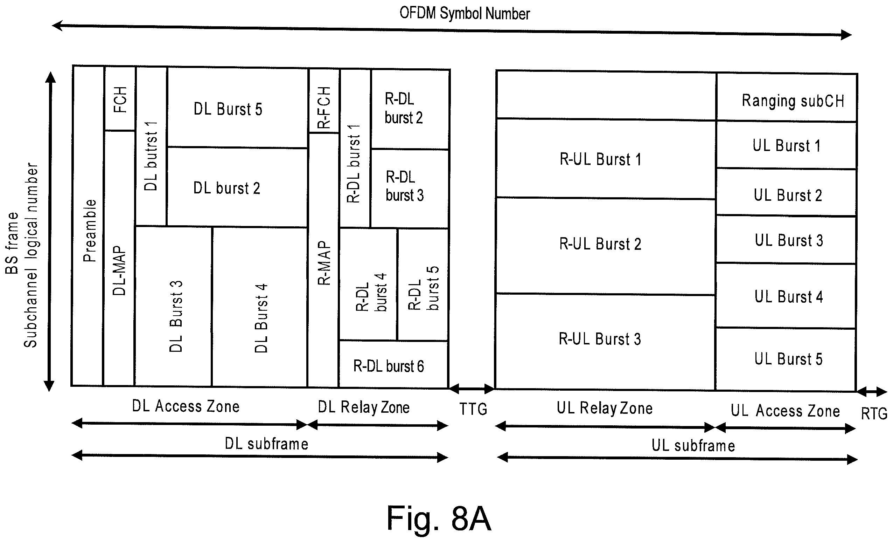

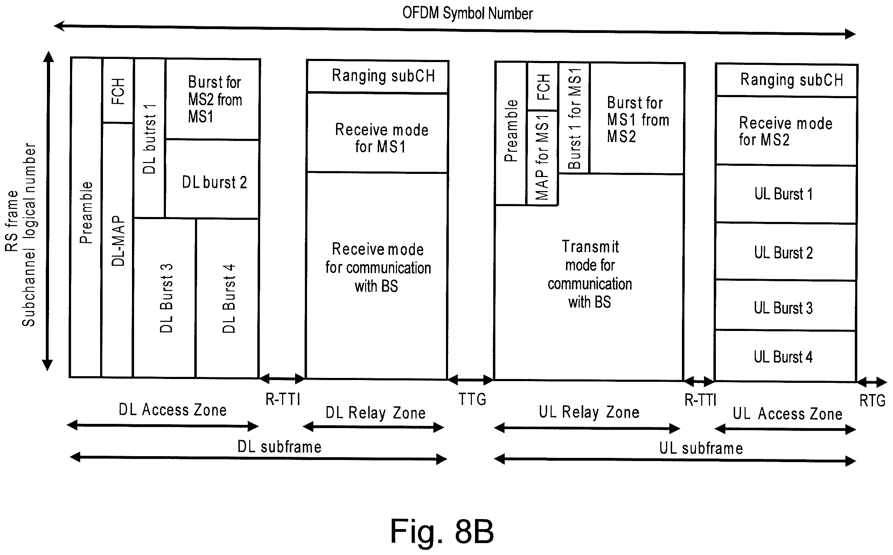

Figures 8A and 8B illustrate non-limiting, example transmission frames in a WiMax context where Fig. 8A relates to a frame at the base station (BS) and Fig. 8B relates to a frame at the relay station (RS). The frames are for a non-transparent relay frame structure in time division transmit receive (TTR) relay mode. Four different zones are defined in both frames: the downlink (DL) Access Zone, the DL Relay Zone, the uplink (UL) Relay Zone, and the UL Access Zone. The Access Zones and the Relay Zones are defined according to the BS frame, such that (1) in the Access Zones, the BS communicates with the MSs, and (2) in the Relay Zones, the BS communicates with the RSs. Note the following transmission conventions are used: BS→RS→MS in the DL, and MS→RS→BS in the UL. Local forwarding means MS1→RS→MS2 in the DL, and MS2→RS→MS1 in the UL.

In the DL Access Zone, the BS transmits to the MSs (see BS frame in Fig. 8A), and the RS transmits to the MSs (see RS frame in Fig. 8B). In the RS frame, there is a specific resource allocated to local forwarding (see the block "Burst for MS2 from MS1"). Other blocks (DL burst 1-4) are used for conventional relay transmissions. In the DL Relay Zone, the BS transmits to the RS (see BS frame in Fig. 8A), and in Fig. 8B, the RS receives the signal from BS (for conventional relay transmission) and the signal from MS1 (for local forwarding-see the block "Receive mode for MS1").

In the UL Relay Zone, the BS receives the signal from the RSs in the BS frame of Fig. 8A, and in Fig. 8B, the RS transmits to the BS (for conventional relay transmission) or to the MS 1 (for local forwarding, see block "Burst for MS 1 from MS2"). In the UL Access Zone, the BS receives the signal from the MSs (in the BS frame of Fig. 8A), and in Fig. 8B, the RS receives the signal from the MSs where the block "Receive mode for MS2" is used for local forwarding, and the blocks UL Burst 1-4 are used for conventional relay transmission.

The technology described above is particularly useful in cellular systems where common relay station(s) are located close to the source mobile station and destination mobile station while the base station is located far away. In other words, it is more efficient to use the relay station(s) to forward the message between two mobile stations directly without passing through the base station. Each mobile station is associated with a group of one or more relay stations determined by the CQI parameter estimates between the relay station(s) and mobile stations. Based on this information, it is determined whether local forwarding is possible, and if so, which relay station(s) is(are) selected for this purpose.

Although various embodiments have been shown and described in detail, the claims are not limited to any particular embodiment or example. None of the above description should be read as implying that any particular element, step, range, or function is essential such that it must be included in the scope of the claims. The scope of patented subject matter is defined only by the claims. The extent of legal protection is defined by the words recited in the allowed claims and their equivalents. Reference to an element in the singular is not intended to mean "one and only one" unless explicitly so stated, but rather "one or more." All structural and functional equivalents to the elements of the above-described preferred embodiment that are known to those of ordinary skill in the art are intended to be encompassed by the present claims. Moreover, it is not necessary for a device or method to address each and every problem sought to be solved by the present invention, for it to be encompassed by the present claims. It is not necessary for a device or method to address each and every problem sought to be solved by the present technology, for it to be encompassed by the present claims.

## Claims

1. A method for communicating between a first mobile station (16) and a second mobile station (16) in a radio communications system that includes a base station (12) associated with a cell coverage area (10) and one or more relay stations (14) located in a cell, the method comprising the steps of determining an association between each of the first and second mobile stations and one or more of the relay stations, wherein each association is determined on the basis of a radio channel quality estimate parameter associated with a radio channel between one or more of the relay stations and each of the first and second mobile stations;
on the basis of the determined associations, determining one or more common relay stations (14), wherein the one or more common relay stations (14) have associations with both the first and second mobile stations (16); and
in response to determining the one or more common relay stations (14), instructing the one or more common relay stations (14) to perform a radio communication between the first and second mobile stations without the radio communication passing through the base station.

2. The method of claim 1, wherein each of the first and second mobile stations is associated with a group of one or more relay stations.

3. The method of claim 1 or 2, wherein determining the association includes determining whether the radio channel quality estimate parameter exceeds a threshold value.

4. The method of any preceding claim, wherein each of the first and second mobile stations performs the associating step, identifies one or more associated relay stations, and provides associated relay station information to the base station directly or via relay station(s), and from that information the base station determines if there is a common relay station for the first and second mobile stations, and if so, allocates radio resources for the common relay station to perform a radio communication between the first and second mobile stations.

5. The method of any of claims 1 to 3, wherein each of the one or more relay stations performs the associating step, determines if it is associated with both the first and second mobile stations, and if so, reports that association to the base station.

6. The method of claim 1, wherein, when there is no common relay station associated with the first and second mobile stations, the radio communication between the first and second mobile stations is performed using the base station, optionally using one or more relay stations in conjunction with the base station to perform the radio communication between the first and second mobile stations.

7. Apparatus for a base station (12) of a radio communications system where the base station is associated with a cell coverage area (10) and is arranged to communicate with one or more relay stations (14) located in a cell, the apparatus comprising:
radio circuitry (20) configured to transmit and receive signals over a radio interface;
a controller (24) configured to determine an association between each of a first mobile station (16) and a second mobile station (16) and the one or more relay stations (14), based on a radio channel quality estimate parameter associated with a radio channel between the one or more relay stations (14) and each of the first and second mobile stations (16), determine one or more common relay stations (14) based on the determined associations, and, in response to determining the one or more common relay stations (14), instruct the one or more common relay stations (14) to perform a radio communication between the first and second mobile stations (16) without the radio communication passing through the base station,
wherein the one or more common relay stations (14) have associations with both the first and second mobile stations (16).

8. The apparatus of claim 7, wherein the controller (24) is arranged to receive a report from the first and second mobile stations (16), including the first mobile station's association with the one or more relay stations (14) and the second mobile station's association with the one or more relay stations (14), or a report from the one or more relay stations (14) including an association between the first and second mobile stations (16) and the one or more relay stations (14).

## Patentansprüche

1. Verfahren zum Kommunizieren zwischen einer ersten Mobilstation (16) und einer zweiten Mobilstation (16) in einem Funkkommunikationssystem, das eine Basisstation (12) beinhaltet, die mit einem Zellabdeckungsbereich (10) und einer oder mehreren Relaisstationen (14) assoziiert ist, die sich in einer Zelle befinden, wobei das Verfahren die folgenden Schritte umfasst:
Bestimmen einer Assoziierung zwischen jeder der ersten und zweiten Mobilstation und einer oder mehreren der Relaisstationen, wobei jede Assoziierung basierend auf einem Funkkanalqualitäts-Schätzungsparameter bestimmt wird, der mit einem Funkkanal zwischen einer oder mehreren der Relaisstationen und jeder der ersten und zweiten Mobilstation assoziiert ist;
basierend auf den bestimmten Assoziierungen, Bestimmen von einer oder mehreren gemeinsamen Relaisstationen (14), wobei die eine oder die mehreren gemeinsamen Relaisstationen (14) Assoziierungen mit sowohl der ersten als auch der zweiten Mobilstation (16) aufweisen; und
als Antwort auf das Bestimmen der einen oder mehreren gemeinsamen Relaisstationen (14), Anweisen der einen oder mehreren Relaisstationen (14), eine Funkkommunikation zwischen der ersten und zweiten Mobilstation durchzuführen, ohne dass die Funkkommunikation durch die Basisstation hindurchgeht.

2. Verfahren nach Anspruch 1, wobei jede der ersten und zweiten Mobilstation mit einer Gruppe von einer oder mehreren Relaisstationen assoziiert ist.

3. Verfahren nach Anspruch 1 oder 2, wobei das Bestimmen der Assoziierung Bestimmen beinhaltet, ob der Funkkanalqualitäts-Schätzungsparameter einen Schwellenwert überschreitet.

4. Verfahren nach einem der vorstehenden Ansprüche, wobei jede der ersten und zweiten Mobilstation den Assoziierungsschritt durchführt, eine oder mehrere assoziierte Relaisstationen identifiziert, und assoziierte Relaisstationsinformationen direkt oder über Relaisstation(en) an die Basisstation bereitstellt, und wobei die Basisstation aus diesen Informationen bestimmt, ob es eine gemeinsame Relaisstation für die erste und zweite Mobilstation gibt, und falls ja, Funkressourcen für die gemeinsame Relaisstation zuweist, um eine Funkkommunikation zwischen der ersten und zweiten Mobilstation durchzuführen.

5. Verfahren nach Anspruch 1 bis 3, wobei jede der einen oder mehreren Relaisstationen den Assoziierungsschritt durchführt, bestimmt, ob sie mit sowohl der ersten als auch der zweiten Mobilstation assoziiert ist, und falls ja, diese Assoziierung der Basisstation meldet.

6. Verfahren nach Anspruch 1, wobei, wenn keine gemeinsame Relaisstation vorhanden ist, die mit der ersten und zweiten Mobilstation assoziiert ist, die Funkkommunikation zwischen der ersten und zweiten Mobilstation unter Verwendung der Basisstation durchgeführt wird, optional unter Verwendung von einer oder mehreren Relaisstationen zusammen mit der Basisstation, um die Funkkommunikation zwischen der ersten und zweiten Mobilstation durchzuführen.

7. Vorrichtung für eine Basisstation (12) eines Funkkommunikationssystems, wobei die Basisstation mit einem Zellabdeckungsbereich (10) assoziiert ist und angeordnet ist, um mit einer oder mehreren Relaisstationen (14), die sich in einer Zelle befinden, zu kommunizieren, wobei die Vorrichtung Folgendes umfasst:
Funkschaltung (20), konfiguriert, um Signale über eine Funkschnittstelle zu übertragen und zu empfangen;
eine Steuerung (24), konfiguriert, um eine Assoziierung zwischen jeder von einer ersten Mobilstation (16) und einer zweiten Mobilstation (16) und der einen oder mehreren Relaisstationen (14) basierend auf einem Funkkanalqualitäts-Schätzungsparameter zwischen der einen oder mehreren Relaisstationen (14) und jeder der ersten und zweiten Mobilstation (16) zu bestimmen, eine oder mehrere gemeinsame Relaisstationen (14) basierend auf den bestimmten Assoziierungen zu bestimmen und, als Antwort auf das Bestimmen der einen oder mehreren gemeinsamen Relaisstationen (14), die eine oder mehreren Relaisstationen (14) anzuweisen, eine Funkkommunikation zwischen der ersten und zweiten Mobilstation (16) durchzuführen, ohne dass die Funkkommunikation durch die Basisstation hindurchgeht,
wobei die eine oder mehreren gemeinsamen Relaisstationen (14) Assoziierungen mit sowohl der ersten als auch der zweiten Mobilstation (16) aufweisen.

8. Vorrichtung nach Anspruch 7, wobei die Steuerung (24) angeordnet ist, um einen Bericht von der ersten und zweiten Mobilstation (16), einschließlich der Assoziierung der ersten Mobilstation mit der einen oder mehreren Relaisstationen (14) und der Assoziierung der zweiten Mobilstation mit der einen oder mehreren Relaisstationen (14), oder einen Bericht von der einen oder mehreren Relaisstationen (14), einschließlich einer Assoziierung zwischen der ersten und zweiten Mobilstation (16) und der einen oder mehreren Relaisstationen (14), zu empfangen.

## Revendications

1. Procédé de communication entre une première station mobile (16) et une seconde station mobile (16) dans un système de communication radio qui comprend une station de base (12) associée à une zone de couverture de cellule (10) et une ou plusieurs stations relais (14) situées dans une cellule, le procédé comprenant les étapes
de détermination d'une association entre chacune des première et seconde stations mobiles et une ou plusieurs des stations relais, dans lequel chaque association est déterminée sur la base d'un paramètre d'estimation de qualité de canal radio associé à un canal radio entre une ou plusieurs des stations relais et chacune des première et seconde stations mobiles ;
sur la base des associations déterminées, de détermination d'une ou de plusieurs stations relais communes (14), dans lequel les une ou plusieurs stations relais communes (14) ont des associations avec à la fois les première et seconde stations mobiles (16) ; et
en réponse à la détermination des une ou plusieurs stations relais communes (14), d'instruction aux une ou plusieurs stations relais communes (14) pour réaliser une communication radio entre les première et seconde stations mobiles sans le passage de la communication radio par la station de base.

2. Procédé selon la revendication 1, dans lequel chacune des première et seconde stations mobiles est associée à un groupe d'une de ou plusieurs stations relais.

3. Procédé selon la revendication 1 ou 2, dans lequel la détermination de l'association comprend le fait le déterminer si le paramètre d'estimation de qualité de canal radio dépasse une valeur seuil.

4. Procédé selon une quelconque revendication précédente, dans lequel chacune des première et seconde stations mobiles réalise l'étape d'association, identifie une ou plusieurs stations relais associées et fournit des informations de station relais associées à la station de base directement ou par l'intermédiaire d'une/de station(s) relais, et à partir de ces informations, la station de base détermine s'il existe une station relais commune pour les première et seconde stations mobiles, et si tel est le cas, attribue des ressources radio à la station relais commune pour réaliser une communication radio entre les première et seconde stations mobiles.

5. Procédé selon l'une quelconque des revendications 1 à 3, dans lequel chacune des une ou plusieurs stations relais réalise l'étape d'association, détermine si elle est associée à la fois aux première et seconde stations mobiles, et si tel est le cas, rapporte cette association à la station de base.

6. Procédé selon la revendication 1, dans lequel, lorsqu'il n'existe pas de station relais commune associée aux première et seconde stations mobiles, la communication radio entre les première et seconde stations mobiles est réalisée à l'aide de la station de base, de manière optimale à l'aide d'une ou de plusieurs stations relais conjointement avec la station de base pour réaliser la communication radio entre les première et seconde stations mobiles.

7. Appareil pour une station de base (12) d'un système de communication radio dans lequel la station de base est associée à une zone de couverture de cellule (10) et est conçue pour communiquer avec une ou plusieurs stations relais (14) situées dans une cellule, l'appareil comprenant :
un circuit radio (20) conçu pour émettre et recevoir des signaux sur une interface radio ;
un dispositif de commande (24) conçu pour déterminer une association entre chacune d'une première station mobile (16) et d'une seconde station mobile (16) et les une ou plusieurs stations relais (14), sur la base d'un paramètre d'estimation de qualité de canal radio associé à un canal radio entre les une ou plusieurs stations relais (14) et chacune des première et seconde stations mobiles (16), déterminer une ou plusieurs stations relais communes (14) sur la base des associations déterminées et, en réponse à la détermination des une ou plusieurs stations relais communes (14), ordonner aux une ou plusieurs stations relais communes (14) de réaliser une communication radio entre les première et seconde stations mobiles (16) sans le passage de la communication radio par la station de base,
dans lequel les une ou plusieurs stations relais communes (14) ont des associations avec à la fois les première et seconde stations mobiles (16).

8. Appareil selon la revendication 7, dans lequel le dispositif de commande (24) est conçu pour recevoir un rapport des première et seconde stations mobiles (16), comprenant l'association de la première station mobile aux une ou plusieurs stations relais (14) et l'association de la seconde station mobile aux une ou plusieurs stations relais (14), ou un rapport des une ou plusieurs stations relais (14) comprenant une association entre les première et seconde stations mobiles (16) et les une ou plusieurs stations relais (14) .
